## Europäisches Patentamt
## European Patent Office
## Office européen des brevets

(19)

(11) Veröffentlichungsnummer: **0 223 736 B1**

(12)  # EUROPÄISCHE PATENTSCHRIFT

(45) Veröffentlichungstag der Patentschrift :
02.01.91 Patentblatt 91/01

(51) Int. Cl.⁵ : **G01B 5/06**, G01B 21/08

(21) Anmeldenummer : 86810457.1

(22) Anmeldetag : 16.10.86

(54) Gerät zur Messung von Höhenabständen.

(30) Priorität : 12.11.85 CH 4837/85

(43) Veröffentlichungstag der Anmeldung :
27.05.87 Patentblatt 87/22

(45) Bekanntmachung des Hinweises auf die
Patenterteilung :
02.01.91 Patentblatt 91/01

(84) Benannte Vertragsstaaten :
DE FR GB IT SE

(56) Entgegenhaltungen :
DE-A- 2 841 548
GA-B- 1 108 792
GB-A- 771 607
GB-A- 2 042 732

(73) Patentinhaber : Meyer, Hans
rue du Bugnon, 24
CH-1020 Renens (CH)

(72) Erfinder : Meyer, Hans
rue du Bugnon, 24
CH-1020 Renens (CH)

(74) Vertreter : Ardin, Pierre
PIERRE ARDIN & CIE 22, rue du Mont-Blanc
Case postale 60
CH-1211 Genève 1 (CH)

## Beschreibung

Die Erfindung betrifft ein Gerät zur Messung von Höhenabständen gemäß dem ersten Teil des Anspruchs 1.

Es sind Geräte bekannt geworden, bei welchen ein Schieber an einer auf einer Grundplatte befestigten Säule auf- und abbewegt wird. Dieser Schieber enthält einen Messtaster, welcher auf das zu messende Objekt aufgesetzt wird. Die dadurch bestimmte Stellung des Schiebers, und damit des Messwertes, wird über ein elektronisches Messystem ausgewertet und angezeigt.

Normalerweise ist der Schieber über einen Seilzug mit einem Gegengewicht versehen, so dass sein Eigengewicht beim Messen keinen Einfluss haben kann. Die Bewegung des Schiebers auf der Säule erfolgt durch einen Antrieb, welcher entweder direkt auf ihm angebracht ist oder aber auf den Seilzug einwirkt. Der Antrieb ist mit einer Einrichtung versehen, welche erlaubt, auf den Schieber einen bestimmten Druck auszuüben, mit welchem der auf ihm befestigte Taster auf das Messobjekt aufgesetzt wird.

Es liegt im Interesse der Messgenauigkeit, dass der auf das Messobjekt ausgeübte Druck so klein wie möglich ausfällt. Dem steht entgegen, dass zwischen dem Schieber und der Säule eine gewisse Reibung auftritt, zu welcher die durch die Anordnung des Gegengewichtes und durch den Antrieb verursachte Reibung hinzukommt. Um Messfehler zu vermeiden, muss deshalb der Messdruck so hoch gewählt werden, dass er wesentlich grösser ausfällt, als die Anzahl dieser Reibungen, damit das Gerät zufiedenstellende Resultate ergibt.

Um diese Schwierigkeit zu umgehen, hat man vorgeschlagen, den Schieber mit einem separaten Tastinstrument zu versehen. Solche Tastgeräte werden in der Messtechnik vielfach verwendet und zeichnen sich vor allem durch einen niedrigen Messdruck und kleine Messtaster aus. Da sich bei modernen Höhenmessgeräten die Notwendigkeit zeigt, die Tastorgane dem Messzweck anzupassen, und anderseits diese Tasteinsätze ein relativ grosses Gewicht erreichen können, lässt sich diese Aufgabe bei den erwähnten Tastinstrumenten nicht gut erfüllen, denn auf der einen Seite verändert das zusätzliche Gewicht die Charakteristik dieser Geräte, auf der anderen Seite zeigt sich die Unmöglichkeit, solche Einsätze in befriedigender Art an den kleinen Tastern zu befestigen.

Eine zweiteilige Anordnung von Tastorgan und Halter ist zum Beispiel in der DE 28 41 548 A1 beschrieben, wobei die Lage der zwei Teile mittels eines Knickgelenkes und einer elastischen Rastvorrichtung festgelegt ist und als Überlastungssicherung dient.

Ein dem ersten Teil des Patentanspruch 1 entsprechendes Gerät ist in der Patentschrift GB 1.108.792 beschrieben. Dieses Gerät weist eine Säule mit einem an dieser Säule verschiebbar angebrachten Gehäuse auf. Ein Tastorgan ist im Gehäuse zur Messung verschiebbar aufgenommen und über einen am Gehäuse drehbar gelagerten Hebel, ein Gegengewicht und ein elastisches Band mit einem Antriebsmotor verbunden, der es erlaubt das Tastorgan im Gehäuse zur Messung zu senken. Bedingt durch die verschiedenen Verbindungsorgane zwischen Motor und Tastorgan, welche zum Teil elastische Teile aufweisen, können bei der Verschiebung des Tastorgans für die Messung ungünstige Schwingungen auftreten. Auch ist der Messdruck für kleine Werte bei diesem Gerät schwierig einzustellen.

Die vorliengede Erfindung bezweckt, mit einem Gerät gemäß Anspruch 1, diesen Nachteilen abzuhelfen.

Durch diese Erfindung wird ein Messgerät geschaffen, welches in der Lage ist, bei niedrigem Messdruck relativ gewichtige Tastorgane aufzunehmen, bei gleichzeitiger Verhinderung der Schwingungen dieser Organe beim Verschieben des Schiebers.

In der nachfolgenden Beschreibung wird ein Ausführungsbeispiel und eine Variante anhand der beigefügten Zeichnungen beschrieben. Es zeigt :

Fig. 1 die Prinzipdarstellung des Messgerätes,

Fig. 2 den Aufbau des Schiebers,

Fig. 3 einen Schnitt durch Fig. 2 längs der Ebene A-A,

Fig. 4 einen Schnitt durch ein Hebelende des Ausgleichshebels,

Fig. 5 ein Querschnitt durch die Variante.

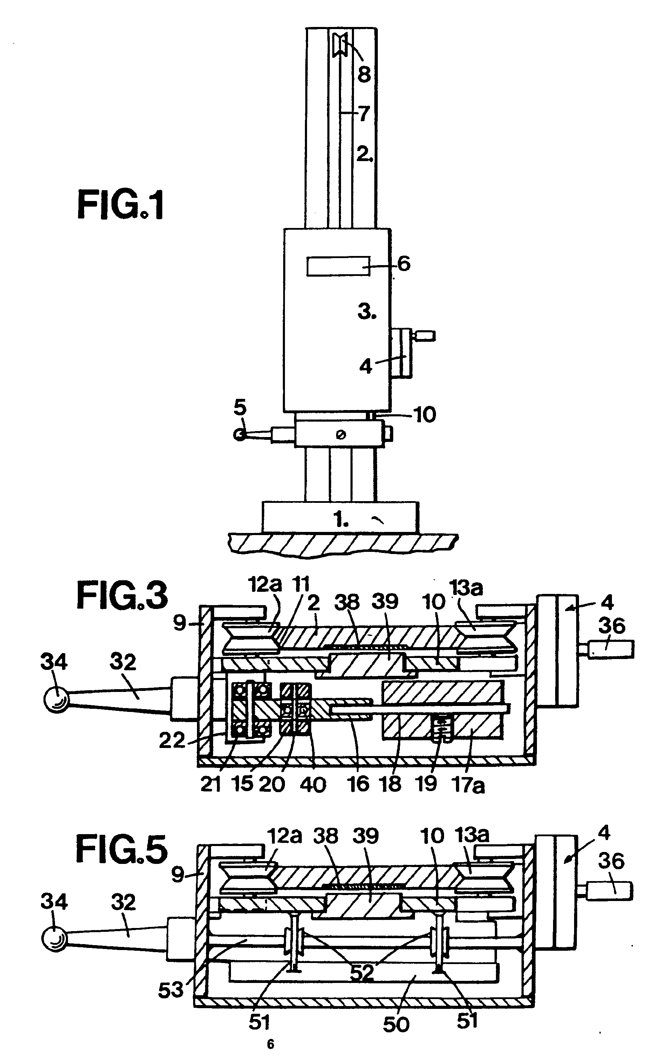

Das Messgerät besteht, wie Fig. 1 zeigt, aus einer Basis 1, einer auf dieser befestigten Säule 2 und einem auf letzterer verschiebbaren Schieber 3. Die Bewegung des Schiebers 3 erfolgt durch eine auf ihm angebrachte Antriebsvorrichtung 4 mit einer Kurbel. Am Schieber 3 ist ein Taster 5 über eine Platte 10 befestigt, welcher auf das zu messende Objekt aufgesetzt wird. Das Messresultat wird durch eine elektronische Abtastvorrichtung ermittelt und im Fenster 6 angezeigt. Der Schieber 3 ist mit einem Seilzug 7 versehen, welcher über eine Rolle 8 zu einem nicht gezeichneten Gegengewicht im Innern der Säule 2 führt.

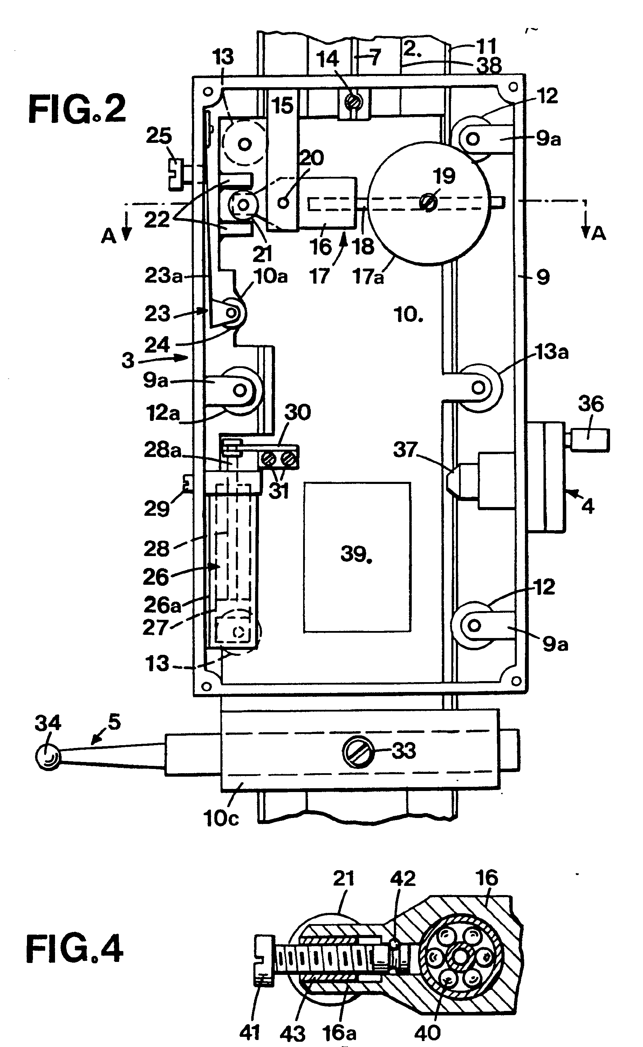

Aus den Figuren 2 und 3 geht der innere Aufbau des Schiebers 3 hervor. Dieser besteht aus einem ersten Teil, im folgenden Gehäuse 9 genannt, und einem zweiten Teil, der Platte 10. Beide sind auf einer an der Säule befestigten Führungsschiene 11 gelagert. An Armen 9a des Gehäuses 9 sind Rollen 12, 12a aufgenommen, welche formschlüssig auf der Schiene 11 laufen können. Die Platte 10 ist ebenfalls mit Rollen 13, 13a ausgerüstet, die auch in die Schiene 11 eingreifen. Aus Gründen der Reibung werden insbesondere die Rollen 13, 13a vorteilhaft auf Kugeln gelagert. Zur Vermeidung von Führungsspiel ist es vorteilhaft, die dem Rollenpaar der einen Seite gegenüberliegende Rolle 12a, 13a mit federndem Andruck zu versehen.

Der ganze Schieber ist an einem Zugseil 7 aufgehängt, das mittels einer Schraube 14 am Gehäuse 9 befestigt ist, und welches in bekannter Art mit einem nicht gezeigten Gegengewicht verbunden ist.

An einer am Gehäuse 9 befindlichen Strebe 15 ist ein um die Achse 20 sich drehender Hebel 16 auf einem Kugellager 40 gelagert, dessen eines Hebelende 18 ein auf ihm verschiebbares, mit einer Schraube 19 festgehaltenes Gewicht 17a trägt. Am anderen Hebelende sind Kugellager 21 aufgenommen, auf welche sich die Platte 10 über Nocken 22 abstützt und somit eine Gegengewichtsvorrichtung 17 bildet, die auf dem Gehäuse 9 abgestützt ist und das Gewicht der Platte 10 mittels des Gegengewichtes 17a ausgleicht.

Das Messgerät weist weiterhin eine Rastvorrichtung 23 zur Festlegung einer Null-Lage zwischen den beiden Teilen 9 und 10 des Schiebers 3 auf. Diese besteht aus einer am Gehäuse befestigten Feder 23a, welche an ihrem freien Ende eine Rolle 24 trägt. Diese rastet in einen Einschnitt 10a der Platte 10 ein. Die Spannung der Feder 23a kann mittels einer im Gehäuse 9 befindlichen Schraube 25 eingestellt werden. Die Feder 23a ist so bemessen, dass die Rolle 24 die Platte 10 in einer Null-Lage sichert, welche der waagerechten Lage des im Gleichgewicht befindlichen Hebels 16 entspricht. Durch die auf die Kurve 10a ausgeübte Kraft wird bei der Verschiebung der Platte 10 gegenüber dem Gehäuse 9 eine gegen diese Verschiebung gerichtete Kraft erzeugt, deren Grösse durch die Schraube 25 eingestellt werden kann, und welche am Tasterende 34 als Messkraft auftritt.

Eine Dämpfungsvorrichtung 26 umfasst ein Zylindergehäuse 26a, das mittels Schrauben 29 am Gehäuse 9 befestigt ist und in welchem sich eine mit einem Kolben 27 versehene Stange 28 bewegt. Das obere Stangenende 28a steht mit einer Gabel 30 im Eingriff, welch letztere auf der Platte 10 mit Schrauben 31 befestigt ist. Die Dämpfungsvorrichtung 26 hat die Aufgabe, unabsichtlich erfolgte Schläge auf den Taster 5 abzuschwächen und dadurch ein Auf- und Abschwingen der Platte 10 zu verhindern.

Der Taster 5 ist verschiebbar in einem Teil 10c der Platte 10 aufgenommen und ist vorne mit einer Tastkugel 34 versehen. Er kann gegen Taster verschiedener Formen leicht ausgewechselt und mittels der Schraube 33 gesichert werden.

Die Antriebsvorrichtung 4 ist im Gehäuse 9 eingebaut und besitzt ein konisches Achsenende 37, das mit der Schiene 11 in Wirkungsverbindung steht. Durch Drehen der Kurbel 36 kann das Gehäuse 9 auf der Schiene 11 auf und ab bewegt werden.

Angedeutet ist die Uebernahme des eingestellten Höhenmasses durch eines der an sich bekannten elektronischen Messsysteme. Ein in die Säule 2 eingelassener Masstab 38 wird durch einen auf der Platte 10 befindlichen Aufnehmer 39 abgetastet, dessen Signale durch eine nicht weiter dargestellte Schaltung umgearbeitet und im Fenster 6, Fig. 1, zur Anzeige gebracht werden.

Aus Fig. 3 ist ersichtlich, dass die Lagerung 40 des Hebels 16 vorteilhaft mit Wälzlagern durchgeführt wird, damit die Reibungsverluste möglichst niedrig ausfallen.

Da die von der Platte 10 aufzunehmenden Tastelemente leicht unterschiedliche Gewichte aufweisen können, muss für einen wirksamen Gewichtsausgleich gesorgt werden. Dies geschieht einerseits durch Verschieben des Gewichtes 17a auf der Stange 18, oder aber durch Verändern des die Kugellager 21 tragenden Hebelarmes. Für letzteren Fall ist in Fig. 4 eine entsprechende Anordnung dargestellt : Die Kugellager 21 befinden sich auf einer Traghülse 43, welche durch eine Schraube 41 gegenüber dem Hebelarm 16a verschoben werden kann. Ein in den Hebel 16 eingelassener Stift 42 sorgt dafür, dass die Schraube 41 in der Längsrichtung des Hebels 16 fixiert bleibt. Am Ort der Schraube 41 wird im Gehäuse 9 vorteilhaft eine Oeffnung vorgesehen, damit die Verstellung leicht von aussen her erfolgen kann.

Die Gegengewichtsvorrichtung 17 ermöglicht es, den vorn an der Platte 10 befestigten Taster 5 ausgeübten Messdruck sehr niedrig zu halten, da die durch die Aufhängung und die Führung verursachten Reibungseinflüsse in engen Grenzen gehalten werden können. Die Rastvorrichtung 23 erlaubt es wiederum einerseits der Platte 10, eine bestimmte Ausgangsstellung zuzusichern, andererseits den Messdruck auf ein gewünschtes Mass einzustellen. Es ist dabei natürlich auch möglich, die Rastvorrichtung 23 auszuschalten, indem die Schraube 25 vollständig zurückgezogen wird.

Der beschriebenen Anordnung liegt noch eine weitere Massnahme zugrunde : Wäre die Platte 10 beispielsweise an Federn am Gehäuse aufgehängt, so käme sie beim Verstellen desselben ins Schwingen. Dieser Nachteil wird durch die getroffene Anordnung wirksam verhindert. Hat zum Beispiel beim Hinaufbewegen des Gehäuses 9 die Platte 10 die Tendenz, zurückzubleiben, so wird dieser Tendenz durch die Hebelwirkung des Gewichtes 17a entgegen gewirkt, mit dem Erfolg, dass die gegenseitige Stellung von Gehäuse 9 und Platte 10 unverändert bleibt. Erst beim Aufsetzen der Platte, resp. des mit ihr verbundenen Tasters 5, auf ein Messobjekt, wird diese Relativstellung verändert.

Eine Schwingung der Platte 10 gegenüber dem Gehäuse 9 kann nur dann auftreten, wenn der Taster einen Schlag erhält, wie dies der Fall sein kann, wenn das Messgerät plötzlich vom Messobjekt weggezogen wird. Um die dadurch verursachte Schwingung zu dämpfen, ist zwischen Platte 10 und Gehäuse 9 die Dämpfungsvorrichtung 26 eingebaut worden.

Zur Vereinfachung des Aufbaus dient die auf der Schiene 11 angeordnete Führung der beiden Schieberteile 9, 10 gleichzeitig. Dabei kommt dem Reibungswiderstand des Gehäuses 9 auf dieser Führung keine Wichtigkeit zu, währenddem bei der Führung der Platte 10 die Reibung möglichst klein zu halten ist, was durch geeignete Wälzlagerung erreicht wird.

Die in Fig. 5 dargestellte Variante, weist anstatt eines drehenden Hebels 16 ein Ausgleichsgewicht 50 auf, das an zwei Seilzügen 51 aufgehängt ist. Diese sind über Rollen 52 geführt, welche auf einer auf dem Gehäuse 9 angebrachten Achse 53 drehen. Das andere Ende der Seilzüge 51 ist an der Platte 10 befestigt.

Das Gerät kann im Erfindungsbereich weitere Abänderungen erfahren. So kann zum Beispiel die Platte 10 ohne Führungsrollen direkt über zwei oder vier Drehbalken am Gehäuse 9 aufgehängt sein, wobei die Enden der Drehbalken mit einem entsprechenden Ausgleichsgewicht belastet sind.

## Ansprüche

1. Gerät zur Messung von Höhenabständen bestehend aus einer Höhenanzeigevorrichtung (39), einer Säule (2) und einem auf einem Führungselement (11) der Säule gelagerten Schieber (3), der aus einem ersten, auf dem Führungselement geführten Teilschieber (9) und einem in Meßrichtung relativ beweglich zu dem ersten Teilschieber angeordneten zweiten Teilschieber (10) besteht, wobei der zweite Teilschieber (10) ein Tastorgan (5) trägt und über Verbindungsorgane (16, 20, 21, 22) mit dem ersten Teilschieber (9) verbunden ist und der zweite Teilschieber mit einem Gegengewicht (17a) eine Gegengewichtsvorrichtung (17) bildet, die auf dem ersten Teilschieber abgestützt ist, **dadurch gekennzeichnet**, daß zur Ausführung der Meßbewegung eine Antriebsvorrichtung (4) zur Verschiebung des ersten Teilschiebers vorgesehen ist und der zweite Teilschieber sich gegenüber dem Gegengewicht (17a), zur Verhinderung von Schwingungen beim Verschieben des Schiebers (3), in Gleichgewichtslage befindet.

2. Gerät nach Anspruch 1, **dadurch gekennzeichnet**, dass die Verbindungsorgane (16, 20, 21, 22) durch einen zweiarmigen Hebel (16, 18) gebildet werden, dessen Gleichgewichtslage durch Veränderung der Länge zumindest eines der Hebelarme (18) beeinflusst wird.

3. Gerät nach Anspruch 1, **dadurch gekennzeichnet**, dass zwischen den beiden Teilschiebern (9, 10) eine elastische Rastvorrichtung (23) zur Festlegung einer Null-Lage angeordnet ist.

4. Gerät nach Anspruch 3, **dadurch gekennzeichnet**, dass die Rastvorrichtung (23) aus einer gefederten, an einen der beiden Teilschieber befestigten Rolle (24) und einem Einschnitt (10a) am anderen der beiden Teilschieber besteht.

5. Gerät nach Anspruch 1, **dadurch gekennzeichnet**, dass zwischen den beiden Teilschiebern eine Dämpfungsvorrichtung (26) angeordnet ist.

6. Gerät nach Anspruch 1, **dadurch gekennzeichnet**, dass die Verbindungsorgane aus mindestens einem über am ersten Teilschieber (9) angebrachte Rollen (52) geführten Seilzug (51) bestehen, wobei das Gegengewicht (50) und der zweite Teilschieber (10) an den Enden des Seilzuges (51) befestigt sind.

## Claims

1. Instrument for measuring vertical distances including a height indicating device (39), a column (2) and a slide (3) mounted on a guiding element (11) of the column, the slide comprising a first partial slide (9) which is mounted on said guiding element and a second partial slide (10) which is movably arranged in the measuring direction with respect to the first partial slide, the second partial slide (10) supporting a gauging element (5) and being connected to the first partial slide (9) through connecting organs (16, 20, 21, 22), the second partial slide forming together with a counterweight (17a) a counterweight device (17) which is supported by the first partial slide, **characterized** in that, in order to execute a measuring displacement, there is provided a drive device (4) for displacing the first partial slide, the second partial slide being in a state of equilibrium with respect to the counterweight (17a) in order to prevent oscillation when displacing the slide (3).

2. Instrument according to claim 1, **characterized** in that the connicting organs (16, 20, 21, 22) are constituted by a two-arm lever (16, 18), the equilibrium position of which being regulated by the change in length of at least one of the lever arms (18).

3. Instrument according to claim 1, **characterized** in that an elastic latching device (23) for fixing a zero position is mounted between the two partial slides (9, 10).

4. Instrument according to claim 3, **characterized** in that the latching device (23) comprises a spring mounted roller (24) which is affixed to one of the two partial slides and a recess (10a) on the other of the two partial slides.

5. Instrument according to claim 1, **characterized** in that a damping device (26) is mounted between the two partial slides.

6. Instrument according to claim 1, **characterized** in that the connecting organs comprise at least one cable (51) which is mounted on pulleys (52) arranged on the first partial slide (9), the counterweight (50) and the second partial slide (10) being secured to the ends of the cable (51).

## Revendications

1. Appareil pour la mesure de distances verticales comprenant un dispositif d'indication de hauteur (39), une colonne (2) et un curseur (3) monté sur un élément de guidage (11) de la colonne et constitué par un premier curseur partiel (9) guidé sur l'élément de guidage et par un second curseur partiel (10) monté de façon mobile suivant la direction de mesure par rapport au premier curseur partiel, le second curseur partiel (10) portant un palpeur (5) et étant relié au premier curseur partiel (9) par des organes de liaison (16, 20, 21, 22), le second curseur partiel constituant avec un contre-poids (17a) un dispositif à contre-poids (17) prenant appui sur le premier curseur partiel, **caractérisé** en ce que, afin d'effectuer le déplacement de mesure, un dispositif d'entraînement est prévu pour la translation du premier curseur partiel et en ce que le second curseur partiel se trouve en position d'équilibre par rapport au contre-poids (17a) dans le but d'éviter des oscillations lors de la translation du curseur (3).

2. Appareil selon la revendication 1, **caractérisé** en ce que les organes de liaison (16, 20 21, 22) sont formés par un levier à deux bras(16, 18), dont la position d'équilibre est réglée par modification de la longueur d'au moins un (18) des bras de levier.

3. Appareil selon la revendication 1, **caractérisé** en ce qu'un dispositif à encoche (23) est monté entre les deux curseurs partiels (9, 10) pour déterminer une position zéro.

4. Appareil selon la revendication 3, **caractérisé** en ce que le dispositif à encoche (23) comprend une roulette (24) montée de façon élastique sur l'un des deux curseurs partiess et une encoche (10a) sur l'autre curseur partiel.

5. Appareil selon la revendication 1, **caractérisé** en ce qu'un dispositif amortisseur (26) est monté entre les deux curseurs partiels.

6. Appareil selon la revendication 1, **caractérisé** en ce que les organes de liaison comprennent au moins un câble (51) disposé sur des poulies (52) disposées sur le premier curseur partiel (9), le contre-poids (50) et le second curseur partiel (10) étant fixés aux extrémités du câble (51).

**FIG.1**

**FIG.3**

**FIG.5**

**FIG.2**

**FIG.4**